# EUROPEAN PATENT APPLICATION

(11) **EP 1 228 702 A1**
(43) Date of publication of application: **07.08.2002**
(21) Application number: 01870019.5
(22) Date of filing: 06.02.2001
(51) Int. Cl.: A23L 1/212, A23P 1/08, A23B 7/16, A23B 7/04

(54) **Frozen fruits**

(71) Applicant: dirafrost F.F.I. n.v., 3540 Herk-de-Stad (BE)
(72) Inventor: Stulens, Els, 3010 Leuven (BE)
(74) Representative: Van Malderen, Joelle

(57) **Abstract**

The present invention is related to frozen fruits or frozen fruit pieces, especially strawberry or strawberry halves, coated with a powder layer able to avoid juice leaking from said fruits or fruit pieces and is related to the preparation process.

## Description

### Field of the invention

The present invention is related to frozen fruits, especially strawberries, which can be put on pies without leaking their juice, to the preparation process of said frozen fruits and to their use in various food preparations.

### Background of the invention and state of the art

Usually, for various food applications, such as strawberry pie, only fresh strawberries are used, because when frozen strawberries are thawed, they tend to loose their juice, due to a broken cell structure by freezing. This characteristic is inherent to the structure of the fruit itself. When they loose their juice the pie becomes wet and the fruits slip off the pie.

However, fresh strawberries are only available during harvest periods. They have to be washed, destalked and cut in to half before they can be used on a fruit preparation such as a pie.

On the other hand, frozen fruits are available during the whole year and are more easy to handle. They can be used directly, especially on pastry, such as a pie, covered thereafter with glazing gel. Once thawed they are ready for consumption.

However, when the fruit is thawing, the juice is captured by said glazing gel which results in an organoleptically unpleasant gel. Further, leaking juice can soak the pastry underneath it. Therefore, frozen fruits are in practice not used for this purpose due to the leaking of juice and the consequences thereof for a food composition.

### Aims of the invention

The present invention aims to provide frozen fruits or frozen fruit pieces, which can be added to a food composition, especially pastry such as pies in its frozen state, without leaking juice when thawing.

Another aim of the present invention is to provide the preparation process of said frozen fruit or frozen fruit pieces and which could be adapted to a general industrial process.

### Summary of the invention

The present invention is related to frozen fruit or frozen fruit pieces, coated with a powder layer able to avoid juice leaking from said fruit or fruit pieces.

Advantageously, said coating powder comprises, possibly with other additives, colouring agents, food grade acids flavours, etc. a mixture of stabilising and gelling agents, preferably made of modified starch, pectins, fructans (such as levan or inulin), edible gums (guar gum, xanthan gum, locust bean gum, gelan gum, ...) having advantageously gelling properties.

The frozen fruit and fruit pieces obtained according to the invention are advantageously obtained from individual quick frozen fruit (IQF) and are preferably IQF strawberry halves, healthy and ripe, obtained from non-fermented fruits.

The frozen fruit and fruit pieces obtained according to the invention, are advantageously individually encapsulated with the coating of the stabilising powder layer and could be qualified as an individual quick frozen fruits or fruit pieces which do not leak after thawing.

Another aspect of the present invention is related to the preparation process or method of said coated frozen fruits, comprising the following steps:
- loading a continuously agitated sealed preparation container with said fruits (individually quick frozen fruits),
- dosing the coating powder on the fruits,
- mixing the fruits and the powder in order to obtain a homogenous dispersion of the coating powder upon the surface of the fruits,
- recovering (discharge, packaging and storage, for instance, in plastic bags, in a cardboard box) of the obtained fruits.
The obtained products can thereafter be easily portioned and put on a food composition, such as a pie, before consumption. All the steps for said preparation are performed under deep freeze temperature conditions (the container or vessel is advantageously pre-cooled at deep-freeze temperature (about -50 C° and preferably with liquid nitrogen) and the obtained products are stored at low temperature. The storage of the obtained products under deep-freeze temperature condition (about -20 C°) can reach up to two years.

Advantageously, said preparation process could be adapted in order to be integrated in classical "industrial" process for the preparation of food composition which may require the addition of other elements in the powder layer such as food grade acids (citric acid, ascorbic acid, ...), food colours and specific flavours.

Usually, the amount of the specific powder layer used in said process varies from about 1% to about 2% in weight of the final obtained product (the total being 100%) in weight.

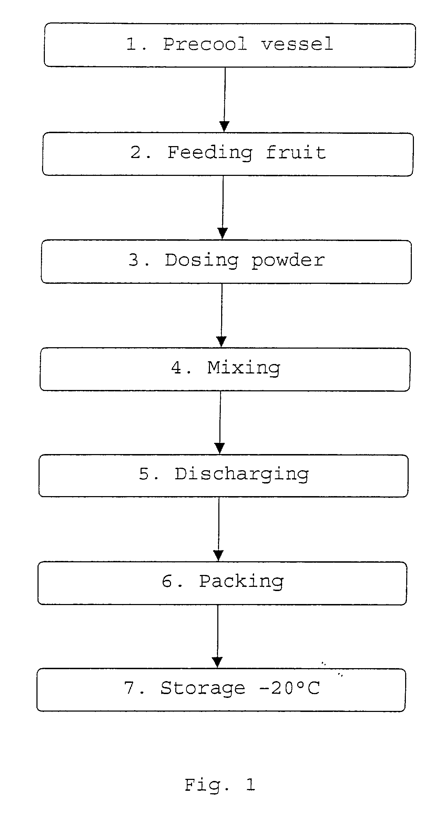

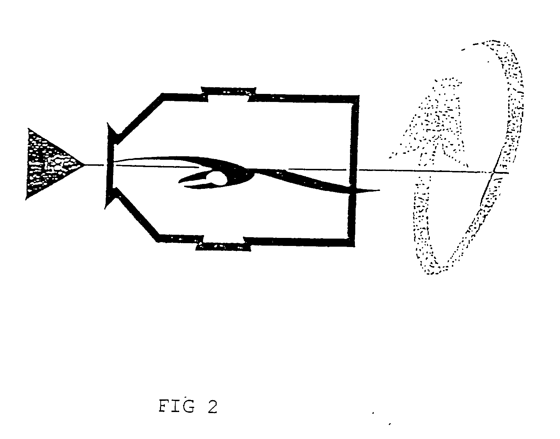

The present invention will be described in more details in the following example, in reference to the enclosed figure 1, showing a schematic flow chart of the various steps used in the method according to the invention and figure 2 representing the movement of the agitating vessel used in the present invention.

### Detailed description of the invention

### Ingredients

In the seasonable harvest of fruits, the ingredient fruits are selected according to their taste, their colour, their size and are cut up in halves of an appropriate size.

The coating powder according to the invention is composed of a mixture of stabilising agents and possible flavours.

Said stabilising agents take care of the "water-management" and are allowed to bind the water coming out of the strawberry and are a major ingredient to the success of the obtained frozen fruits or fruit pieces.

The juice coming out of the thawing fruit is absorbed by the stabilisers, which advantageously hydrates and forms a gel. The fruit will keep its shape in the gel layer. Said gel has advantageously a smooth texture in order to give a nice mouthfeel. The stabilising agents need to avoid syneresis after thawing. The stabilising agents have to be freeze-thaw stable and acid stable in order to allow the formation of a gel. Further, also a nice surface gloss is desirable.

Preferably, said mixture of stabilisers are made of modified starch and edible gums. Other ingredients such as food grade acids (citric acid, ascorbic acids), food colours and flavours can be also added to said coating powder. A preferred composition is presented in the following table 1.

| **Frozen fruit:** | |
|---|---|
| Strawberry halves | 100,0 kg |

| **Powder mixture:** | |
|---|---|
| Modified starch | 0,8 kg |
| Guar gum | 0,27 kg |
| Xanthan gum | 0,05 kg |
| Flavour | 0,05 kg |

The preparation process is preferably obtained according to the flow chart presented in figure 1:
- the vessel is pre-cooled to -50°C with liquid nitrogen,
- the frozen fruits are fed into the vessel,
- the powder is dispersed uniformly on the surface of the fruits,
- the fruits and the powder are mixed in the agitating vessel,
- the coated fruits are discharged, packed, stored at - 20°C.

The production of the coated fruits can take place in a sealed, agitating vessel, such as the one presented in figure 2.

In said process, the coating powder will be dispersed on the fruits surface and form a powder layer which will freeze around the fruit pieces, thus forming a coating layer on the fruit pieces.

The low temperature will result in an improved coating of the fruits and will guarantee also the microbiological stability of the obtained preparation.

The fruits can thereafter be put on a pie (possibly filled with a cream)in its frozen state, a glazing gel can be put on top of it, and when the fruits are thawed, the pie is ready for consumption.

## Claims

1. Frozen fruits or frozen fruit pieces coated with a powder layer able to avoid juice leaking from said fruits or fruit pieces.

2. Frozen fruits or frozen fruit pieces according to the claim 1, wherein said coating powder comprises a mixture of stabilising agents.

3. Frozen fruits or frozen fruit pieces according to the claim 2, wherein said coating powder is a mixture of stabilising and gelling agents selected from the group consisting of modified starch, pectines, fructans and edible gums having gelling properties.

4. Frozen fruits or frozen fruit pieces according to any of the preceding claims 1 to 3, **characterised in that** the fruits are strawberries.

5. Frozen fruits or frozen fruit pieces according to any of the preceding claims **characterised in that** the coating powder further comprises one or more additive(s) selected from the group consisting of colouring agents, food grade acids or flavours.

6. Preparational process of the frozen fruits or frozen fruit pieces according to any of the preceding claims, comprising the following steps:
- loading a continuously agitating sealed preparation container with individually quick frozen fruits,
- dosing the coating powder on the fruits,
- mixing the fruits on the powder in order to obtain an homogenous dispersion of the coating powder upon the surface of the fruits,
- recovering and,
- recovering the obtained fruits.

7. The method according to the claim 6, **characterised in that** it comprises the further steps of discharging, packaging and storage, preferably in sterile plastic bags, of the obtained fruits.

8. The method according to the claim 6 or 7, **characterised in that** all the steps of said method are performed under deep-freeze temperature conditions.

9. Use of the frozen fruits or the frozen fruit pieces according to any of the preceding claims 1 to 5, or obtained according to the method of the claim 6 to 8 for the preparation of a food composition.

10. Use according to the claim 9 in pastry, preferably for the preparation of pies.
